# EUROPÄISCHE PATENTSCHRIFT

(11) **EP 0 842 063 B1**
(45) Veröffentlichungstag und Bekanntmachung des Hinweises auf die Patenterteilung: **19.01.2000**
(21) Anmeldenummer: 96918677.4
(22) Anmeldetag: 08.06.1996
(51) Int. Cl.: B60R 21/20, B60R 21/22

(54) **INSASSENRÜCKHALTESYSTEM FÜR DEN RÜCKSITZ EINES FAHRZEUGES**
PASSENGER RESTRAINT SYSTEM FOR THE BACKSEAT OF A VEHICLE
SYSTEME DE RETENUE POUR PASSAGERS OCCUPANT LA BANQUETTE ARRIERE D'UN VEHICULE

(30) Priorität: 04.08.1995 DE 19528627
(43) Veröffentlichungstag der Anmeldung: 20.05.1998
(73) Patentinhaber: AUDI AG, 85045 Ingolstadt (DE)
(72) Erfinder: GÖTZ, Herwig, D-85101 Lenting (DE); OSTERMANN, Folkert, D-40699 Erkrath (DE)
(74) Vertreter: Engelhardt, Harald
(86) Internationale Anmeldenummer: EP9602494
(87) Internationale Veröffentlichungsnummer: WO9706035

(56) Entgegenhaltungen:
- DE-A- 1 951 585
- DE-A- 4 018 470
- GB-A- 2 261 636
- GB-A- 2 293 355
- US-A- 5 251 931
- US-A- 5 348 342

## Beschreibung

Die Erfindung bezieht sich auf ein Insassenrückhaltesystem für den Rücksitz eines Fahrzeuges gemäß dem Oberbegriff des Patentanspruchs 1.

Bekannte Insassenrückhaltesysteme mit einem Airbag und einem Gasgenerator sind beispielsweise im äußeren Randbereich der Lehne angeordnet. Nach außen hin wird das Airbagmodul durch den Bezugstoff der Lehne abgedeckt. Eine darin ausgeführte Reißnaht bildet eine Schwächung des Bezugsstoffes an der vorgesehenen Austrittstelle des Airbags. In der Praxis hat sich gezeigt, daß die erforderlichen Reißkräfte zum Zerstören der Reißnaht großen Toleranzen unterliegen. Dies kann sich unter anderem negativ auf die Ausbringgeschwindigkeit des Airbags auswirken.

Aus der JP 4-166451 ist weiter bekannt, als Seitenaufprallschutz für die Fondpassagiere ein Airbagmodul in der hinteren Seitentüre anzuordnen. Das Airbagmodul wird dort durch eine gepolsterte Klappe mit einer Sollbruchstelle zum Austritt des Airbags abgedeckt. Auch diese Sollbruchstelle läßt sich nicht einfach beherrschen. Außerdem können durch die aufgerissene Klappe scharfkantige Grate entstehen.

Der Erfindung liegt die Aufgabe zugrunde, mit einfachen Mitteln ein Insassenrückhaltesystem mit einer gepolsterten Klappe zu schaffen, welches an günstiger Stelle anbringbar ist und keine Sollbruchstellen zum Durchtritt des Airbags aufweist.

Die Aufgabe wird durch die Merkmale des Patentanspruchs 1 gelöst.

Dadurch, daß das Airbagmodul nahe dem äußeren Lehnenrand des Rücksitzes befestigt ist, ergibt sich eine günstige Zuordnung des Airbags zum Kopf des Insassen. Besonders vorteilhaft ist die Anordnung und Ausgestaltung der das Airbagmodul zum Fahrgastraum hin abdeckenden Klappe. Der in Fahrtrichtung nach vorne weisende Abschnitt der Klappe liegt mit seinem freien Ende unter Bildung eines Spaltes an einem seitlichen Karosserie- oder Verkleidungsteil an. Der Airbag und der Gasgenerator sind so in dem von der Klappe umschlossenen Raum angeordnet, daß der Airbag durch den Spalt ausbringbar ist. Beim Ausbringen des Airbags wird die Klappe-wie an sich bekannt - weggedrückt. Dies kann durch Verformung der Klappe, durch Wegschwenken der Klappe oder durch Kcmbination beider Möglichkeiten erfolgen.

Durch die vorgeschlagene Lösung werden die bekannten Sollbruchstellen durch einen Spalt ersetzt, der sich durch die Ausgestaltung der Klappe und deren Anordnung im Fahrzeug ergibt.

Die seitlichen Karosserie- oder Verkleidungsteile, an welche sich das freie Ende der Klappe unter Bildung eines Spaltes anschließt, können beispielsweise durch die hintere Dachsäule oder durch ein Verkleidungsteil für die Dachsäule gebildet sein. Solche Verkleidungsteile aus Kunststoff an dieser Stelle werden häufig eingesetzt, um den Bereich von der Lehne der Rücksitzbank bis zur Türdichtung zu überbrücken. Über die weitere Ausgestaltung dieses Verkleidungsteiles läßt sich beispielsweise auch die Richtung und Anlagefläche für den Airbag mitbestimmen.

Besonders vorteilhaft ist, wenn die Klappe und das Airbagmodul integrierter Bestandteil einer umklappbaren Lehne des Rücksitzes sind. Die Klappe bildet dann zweckmäßig einen Abschnitt der Rückenlehne, wozu ihre Oberfläche entsprechend auszuführen ist. Optisch unterscheidet sie sich dann kaum von Rückenlehnen herkömmlicher Bauart, da der Spalt zwischen der Klappe, die einen Teil der Pclsterung bildet, und dem angrenzenden seitlichen Bauteil in seiner technischen Funktion von den Fahrzeugbenutzern nicht wahrnehmbar sein dürfte.

Auch bei integriertem Airbagmodul ist sicherzustellen, daß sich die Klappe im Bedarfsfall weit genug öffnen kann. Dies kann dadurch geschehen, daß die Klappe selbst genügend Elastizität aufweist. Es ist jedoch auch denkbar, daß sich der an die Klappe anschließende Polsterabschnitt der Lehne nicht unmittelbar, sondern unter Bildung einer kleinen Tasche anschließt.

Bei dem in der Lehne integrierten Airbagmodul ist von Vorteil, daß die Lehne zusammen mit dem Airbagmodul als Baugruppe vormontierbar ist und die komplette Baueinheit zeitsparend am Endmontageband eingebaut werden kann.

Bei Fahrzeugen mit einer starren Lehne wird die Klappe und das Airbagmodul vorteilhaft an einem Karosseriepfosten angeordnet. Dadurch sind keine Änderungen an der Lehne notwendig.

Gemäß einer vorteilhaften Ausgestaltung der Erfindung kann bei Befestigung des Airbagmoduls neben der Lehne die Klappe die Lehne in der Kontur und Oberfläche weiterführen. Dadurch ergibt sich eine breitere Sitzfläche. Die Klappe wird man in diesem Fall entsprechend ausführen und insbesondere mit demselben Bezugsstoff wie die Lehne überziehen.

Besonders vorteilhaft ist, wenn die Klappe unter Vorspannung an dem seitlichen Karosserie- oder Verkleidungsteil anliegt. Dadurch wird eine sog. Null-Fuge erreicht, welche optisch sehr ansprechend ist. Durch die Vorspannung wird außerdem dem Entstehen von Geräuschen entgegengewirkt.

Der Anspruch 6 kennzeichnet eine Maßnahme zur Erzeugung der Vorspannung.

Für die Klappe wird bevorzugt ein U-förmiger Aufbau vorgeschlagen. Dabei dient einer der beiden Schenkel dazu, die Klappe zu befestigen, während das freie Ende des anderen Schenkels an dem seitlichen Karosserie- oder Verkleidungsteil anliegt. Durch die U-Form läßt sich die Klappe gut an örtliche Gegebenheiten anpassen und außerdem ein günstiges Schwenkverhalten erreichen.

Schließlich kann die Klappe auf ihrer Innenseite, zumindest in dem Bereich nahe des Spaltes, eine reibungsmindernde Oberfläche aufweisen. Dadurch gleitet der Airbag beim Entfalten ohne große Verluste an der Innenseite der Klappe entlang, was eine schnelle Ausbringgeschwindigkeit zur Folge hat.

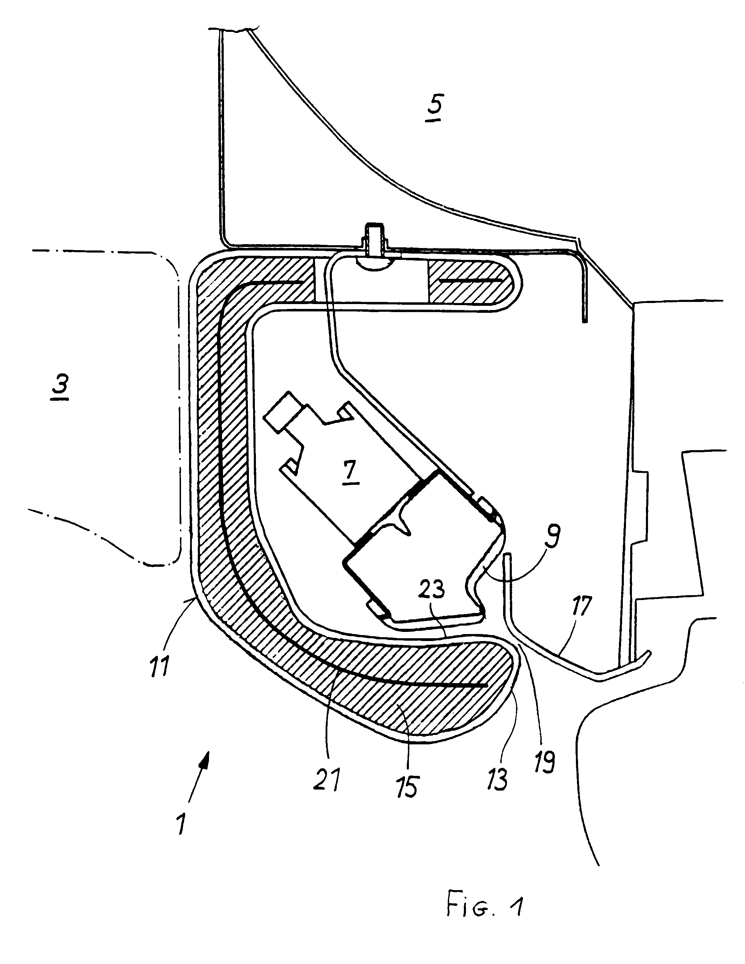

Ein Ausführungsbeispiel der Erfindung ist in der Zeichnung dargestellt. Diese zeigt in einem Horizontalschnitt ein Insassenrückhaltesystem mit einem Airbagmodul 1, angeordnet im Anschlußbereich der Linie 3 eines Rücksitzes an einem rückwärtigen Pfosten 5 einer Fahrzeugkarosserie.

Das Airbagmodul 1 umfaßt einen am Pfosten 5 befestigten Gasgenerator 7 mit einem zusammengefalteten Airbag 9. Nach außen hin ist diese Einheit durch eine Klappe 11 abgedeckt. Die Klappe 11 weist einen U-förmigen Querschnitt auf. Das freie Ende 13 des dem Innenraum zugewandten Abschnitts 15 der Klappe 11 liegt unter Vorspannung an einem seitlichen Verkleidungsteil 17 des Pfostens 5 an. Der sich dadurch ergebende Spalt 19 dient der Ausbringung des Airbags 9. Die Vorspannung wird durch einen Federbügel 21 erzeugt.

In der Schnittdarstellung ist zu erkennen, daß der Federbügel 21 in der ausgeschäumten Klappe 11 angeordnet ist. Auf der dem Fahrgastraum zugewandten Seite der Klappe 11 ist diese mit einem Bezugsstoff überzogen, welcher dem Bezugsstoff für die Lehne 3 entspricht. Schließlich ist die innere Oberfläche 23 der Klappe 11 in den Bereich nahe des Spaltes 19 und des Airbags 9 reibungsmindernd beschichtet, wodurch die Ausbringgeschwindigkeit des Airbags 9 vergrößert wird. Bei der sensorgesteuerten Auslösung des Gasgenerators 7 und die dadurch erzeugte Füllung des Airbags 9 bewirkt, daß die Klappe 11 unter Überwindung der Eigenelastizität und der Federwirkung des Federbügels 21 aufgebogen wird. Gleichzeitig wird die gepolsterte Lehne 3 in ihrem Anlagebereich an die Klappe 11 zusammengedrückt.

## Patentansprüche

1. Insassenrückhaltesystem für den Rücksitz eines Fahrzeuges, mit einem hinter einer gepolsterten Klappe angeordneten, einen Airbag und einen Gasgenerator umfassenden Airbagmodul, wobei beim Aufblasen des Airbags die Klappe weggedrückt wird und den Airbag zur Entfaltung freigibt, **dadurch gekennzeichnet**, daß das Airbagmodul (1) nahe dem äußeren Lehnenrand des Rücksitzes befestigt ist, daß die Klappe (11) zumindest einen etwa in Fahrtrichtung nach vorne weisenden Abschnitt (15) aufweist, daß das freie Ende (13) des Abschnitts (15) unter Bildung eines Spaltes (19) an einem seitlichen Karosserie- oder Verkleidungsteil (17) anschließt, und daß der Gasgenerator (7) und der Airbag (1) so angeordnet sind, daß der Airbag (9) durch den Spalt (19) ausbringbar ist.

2. Insassenrückhaltesystem nach Anspruch 1, **dadurch gekennzeichnet**, daß die Klappe (11) und das Airbagmodul (1) integrierter Bestandteil einer umklappbaren Lehne des Rücksitzes sind.

3. Insassenrückhaltesystem nach Anspruch **1, dadurch gekennzeichnet**, daß die Klappe (11) und das Airbagmodul (1) an einem Karosseriepfosten (5) angeordnet sind.

4. Insassenrückhaltesystem nach Anspruch 3, **dadurch gekennzeichnet,** daß die Klappe (11) die Lehne (3) in der Kontur und Oberfläche weiterführt.

5. Insassenrückhaltesystem nach einem der Ansprüche 1 bis 4, **dadurch gekennzeichnet**, daß die Klappe (11) unter Vorspannung an dem seitlichen Karosserie- oder Verkleidungsteil (17) anliegt.

6. Insassenrückhaltesystem nach Anspruch 5, **dadurch gekennzeichnet**, daß die Vorspannung durch einen mit der Klappe (11) verbundenen Federbügel (21) erzeugt ist.

7. Insassenrückhaltesystem nach einem der Ansprüche 1 bis 6, **dadurch gekennzeichnet**, daß die Klappe (11) im Horizontalschnitt einen U-förmigen Aufbau aufweist, wobei über einen der beiden Schenkel die Befestigung der Klappe erfolgt und das freie Ende (13) des anderen Schenkels an das seitliche Karosserie- oder Verkleidungsteil (17) anschließt.

8. Insassenrückhaltesystem nach einem der Ansprüche 1 bis 7, **dadurch gekennzeichnet**, daß die Klappe (11) auf ihrer Innenseite, zumindest in den Bereich nahe des Spaltes (19), eine reibungsmindernde Oberfläche (23) aufweist.

## Claims

1. Passenger restraint system for the rear seat of a vehicle, having an airbag module arranged behind an upholstered flap and comprising an airbag and a gas generator, upon inflation of the airbag the flap being pushed away and the airbag thereby released for deployment, **characterised in that** the airbag module (1) is attached close to the external edge of the rear seat rest, that the flap (11) has at least one portion (15) that faces forwards substantially in the direction of travel, that the free end (13) of the portion (15) is contiguous with a lateral body or trim element (17) so as to form a gap (19), and that the gas generator (7) and the airbag (1) are so arranged that the airbag (9) can be brought out through the gap (19).

2. Passenger restraint system according to claim 1, characterised in that the flap (11) and the airbag module (1) are an integrated part of a fold-down rest of the rear seat.

3. Passenger restraint system according to claim 1, characterised in that the flap (11) and the airbag module (1) are arranged on a body pillar (5).

4. Passenger restraint system according to claim 3, characterised in that the flap (11) carries on the rest (3) in contour and surface.

5. Passenger restraint system according to any of claims 1 to 4, characterised in that the flap (11) rests with pretension against the lateral body or trim element (17).

6. Passenger restraint system according to claim 5, characterised in that the pretension is produced by a resilient yoke (21) joined to the flap (11).

7. Passenger restraint system according to any of claims 1 to 6, characterised in that seen in horizontal section the flap (11) is a U-shaped construction, the flap being attached via one of the two side-pieces, and the free end (13) of the other side-piece being contiguous with the lateral body or trim element (17).

8. Passenger restraint system according to any of claims 1 to 7, characterised in that on its inside face, at least in the region near the gap (19), the flap (11) has a friction-reducing surface (23).

## Revendications

1. Système de retenue pour passagers occupant la banquette arrière d'un véhicule, avec un module de coussin d'air, disposé derrière un clapet rembourré, comprenant un coussin d'air et un générateur de gaz, dans lequel, lors du gonflage du coussin d'air, le clapet est expulsé et le coussin d'air est libéré pour déploiement, caractérisé en ce que le module de coussin d'air (1) est fixé près du bord de dossier extérieur du siège arrière, en ce que le clapet (11) présente au moins un tronçon (15) tourné vers l'avant sensiblement dans la direction de roulage, en ce que l'extrémité libre (13) du tronçon (15) se raccorde, en formant un interstice (19) à une partie de carrosserie ou d'habillage (17) latérale, et en ce que le générateur de gaz (7) et le coussin d'air (1) sont disposés de manière que le coussin d'air (9) puisse être sorti en passant par l'interstice (19).

2. Système de retenue pour passagers selon la revendication 1, caractérisé en ce que le clapet (11) et le module à coussin d'air (1) sont des composants intégrés d'un dossier rabattable du siège arrière.

3. Système de retenue pour passagers selon la revendication 1, caractérisé en ce que le clapet (11) et le module à coussin d'air (1) sont disposés sur un pilier de carrosserie (5).

4. Système de retenue pour passagers selon la revendication 3, caractérisé en ce que le clapet (1) prolonge le contour et la surface du dossier (3).

5. Système de retenue pour passagers selon l'une des revendications 1 à 4, caractérisé en ce que le clapet (11) appuie sous précontrainte sur la partie de carrosserie ou d'habillage (17) latérale.

6. Système de retenue pour passagers selon la revendication 5, caractérisé en ce que la précontrainte est générée par un étrier élastique (21) relié au clapet (11).

7. Système de retenue pour passagers selon l'une des revendications 1 à 6, caractérisé en ce que le clapet (11) présente en coupe horizontale une structure en forme de U, la fixation du clapet s'effectuant par l'intermédiaire de l'une des branches et l'extrémité libre (13) de l'autre branche se raccordant à la partie de carrosserie ou d'habillage (17) latérale.

8. Système de retenue pour passagers selon l'une des revendications 1 à 7, caractérisé en ce que le clapet (11) présente sur son côté intérieur, au moins dans la zone proche de l'interstice (11), une surface (23) diminuant le frottement.
